# EUROPEAN PATENT APPLICATION

(11) **EP 2 712 710 A1**
(43) Date of publication of application: **02.04.2014**
(21) Application number: 13004667.5
(22) Date of filing: 25.09.2013
(51) Int. Cl.: B25F 5/00, B27B 17/00

(54) **Power tool**

(30) Priority: 26.09.2012 JP 2012212318
(71) Applicant: Makita Corporation, Anjo-shi, Aichi 446-8502 (JP)
(72) Inventor: Yanagihara, Kenya, Anjo-shi Aichi, 446-8502 (JP); Kawashima, Hideo, Anjo-shi Aichi, 446-8502 (JP)
(74) Representative: Müller-Boré & Partner Patentanwälte PartG mbB

(57) **Abstract**

A chain saw (100) as a power tool which has an engine (111) and an electric motor (141) is provided. The chain saw (100) comprises a driving shaft (131) which is adapted to drive a saw chain (105), a controller (139) which controls the electric motor (141), and a driving source which provides current to the electric motor (141). Further, the chain saw (100) is adapted as the saw chain (105) is drivable in a hybrid driving mode in which the engine (111) and the electric motor (141) drive the driving shaft (131) simultaneously. The power source of the chain saw (100) includes a capacitor (138). The capacitor (138) is electrically connected to the controller (139).

## Description

### Introduction:

The invention relates to a power tool which drives a tool and performs a predetermined operation.

### Description of the Related Art:

Japanese Laid-Open Patent Application Publication No. 2011-244724 discloses a brush cutter which has an engine and a motor. The brush cutter drives a blade by means of the engine or the motor respectively by switching the engine and the motor which are provided as driving sources.

### Statement of Invention:

In the brush cutter described above, the engine and the motor which are provided as driving sources. The engine and the motor are driven independently to each other. That is, when one driving source is driven, the other driving source stops driving operation. Accordingly, for a user of such brush cutter, when one driving source is driven, the other driving source is an unnecessary element in terms of usability.

An object of the invention is, in consideration of the above described problem, to improve a driving of a power tool which has an engine and a motor.

Above-mentioned object is achieved by an invention of claim 1. According to a preferable aspect of the invention, a power tool comprises an engine, a motor, a driving shaft capable of driving a tool, a controller which controls the motor, and a power source which provides current to the motor. The tool is drivable in a hybrid driving mode in which both the engine and the motor drive the driving shaft. Further, the power source includes a capacitor which is electrically connected to the controller. In this aspect, the power source preferably includes a battery, a capacitor and so on, which is capable of providing electric current to the motor. Further, the motor is also called an electric motor.

According to this aspect, a hybrid power tool in which both the engine and the motor drive the driving shaft is provided. Therefore, a rational driving of the power tool which has the engine and the motor is achieved. Further, in the hybrid power tool, the motor is driven by electricity stored in the capacitor. Further, by utilizing the capacitor, a charging and discharging efficiency of the power source of the power tool is improved.

According to a further preferable aspect, the motor functions as a generator which charges the capacitor, when the motor is driven by the engine. That is, when the motor is driven by the engine, the controller has the motor generate electricity by braking the motor. In other words, the motor is performed as a generator under a control of the controller. Therefore, the capacitor is charged by current generated by the motor performing as the generator.

According to this aspect, the motor which drives the driving shaft together with the engine is also utilized as a generator. That is, a generator for charging the capacitor other than the motor is not needed to the power tool.

According to a further preferable aspect, the power source further includes a battery. Further, the capacitor is arranged between the battery and the controller so that the capacitor electrically connects the battery and the controller.

According to this aspect, in case that large current is temporarily needed during an operation of the power tool, by using electricity stored in the capacitor, large current is provided to the motor by both the capacitor and the battery. Therefore, the battery is downsized.

According to a further preferable aspect, in a state that a voltage of the capacitor is higher than a voltage of the battery, the battery is charged by current provided from the capacitor to the battery.

According to this aspect, when a voltage of the capacitor exceeds a voltage of the battery, current is automatically provided to the battery from the capacitor, and thereby the battery is charged. Further, overcurrent to the battery is prevented. Further, because current is provided automatically, a control device for charging the battery is not needed to the power tool.

According to a further preferable aspect, the power tool further comprises a motor driving mode in which only the motor drives the driving shaft, and an engine driving mode in which only the engine drives the driving mode. Further, the hybrid driving mode, the motor driving mode and the engine driving mode are selectively switchable and the tool is driven in the selected driving mode.

According to a further preferable aspect, the power tool comprises a main housing which houses the engine and the motor, and a handle which protrudes from the main housing. Further, the power source is arranged at the handle.

According to a further preferable aspect, the controller and the power source are arranged at the handle so that a distance between the power source and the main housing is longer than a distance between the controller and the main housing.

According to a further preferable aspect, the power source includes a battery. Further, the controller, the capacitor and the battery are arranged at the handle in order of increasing distance from the main housing.

According to the invention, a driving of a power tool is improved, and thereby the power tool is rationally driven.
Other objects, features and advantages of the invention will be readily understood after reading the following detailed description together with the accompanying drawings and the claims.

### Description of the Drawings:

Fig. 1 shows a side view of a power tool according to a preferred embodiment.
Fig. 2 show a cross-sectional view taken from line II-II of Fig. 1 .
Fig. 3 shows a block diagram of a drive system of the power tool.

### Description of Specific Embodiments:

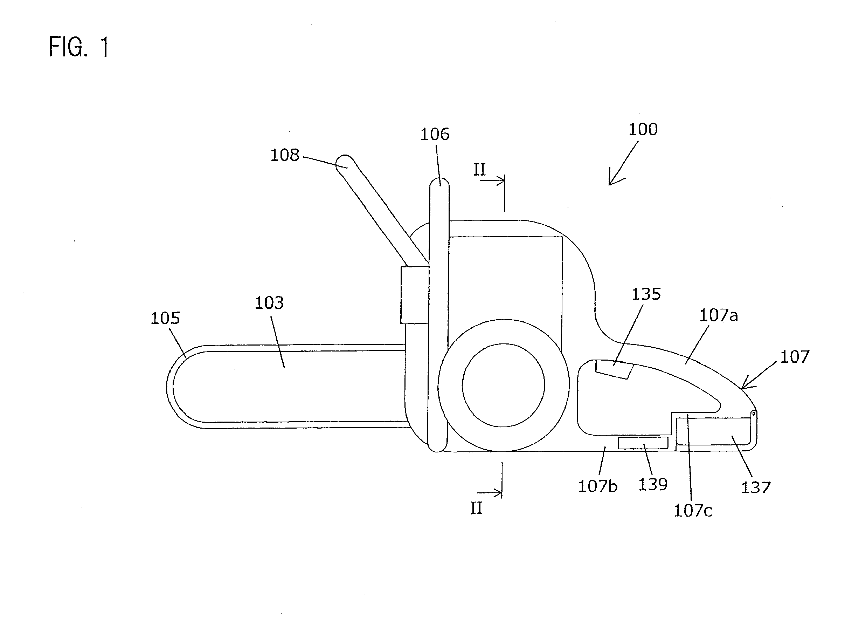

Each of the additional features and method steps disclosed above and below may be utilized separately or in conjunction with other features and method steps to provide and manufacture improved power tools and method for using such the power tools and devices utilized therein. Representative examples of the invention, which examples utilized many of these additional features and method steps in conjunction, will now be described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.
An exemplary embodiment is explained with reference to Fig. 1 to Fig. 3. This embodiment is one example of a power tool applied to a chain saw 100. As shown in Fig. 1, the chain saw 100 is mainly provided with a main housing 101, a guide bar 103, a front handle 106, a rear handle 107 and a hand guard 108. Hereinafter, the guide bar 103 side of the chain saw 100 (left-hand side of Fig. 1) is called a front side, and the rear handle 107 side of the chain saw 100 (right-hand side of Fig. 1) is called a rear side.

The main housing 101 forms a main body as an outline of the chain saw 100. The guide bar 103 is arranged on the main housing 101 so as to protrude forward from the main housing 101. A saw chain 105 is detachably attached on an outer periphery of the guide bar 103. The attached saw chain 105 is driven along the outer periphery of the guide bar 103, and thereby a cutting operation in which the saw chain 105 cuts a workpiece is performed.

The front handle 106 and the hand guard 108 are connected to the main housing 101 at a front side of the chain saw 100. The rear handle 107 is connected to the main housing 101 at a rear side of the chain saw 100. The chain saw 100 is adapted to perform a cutting operation in a state that a user holds the front handle 106 and the rear handle 107.

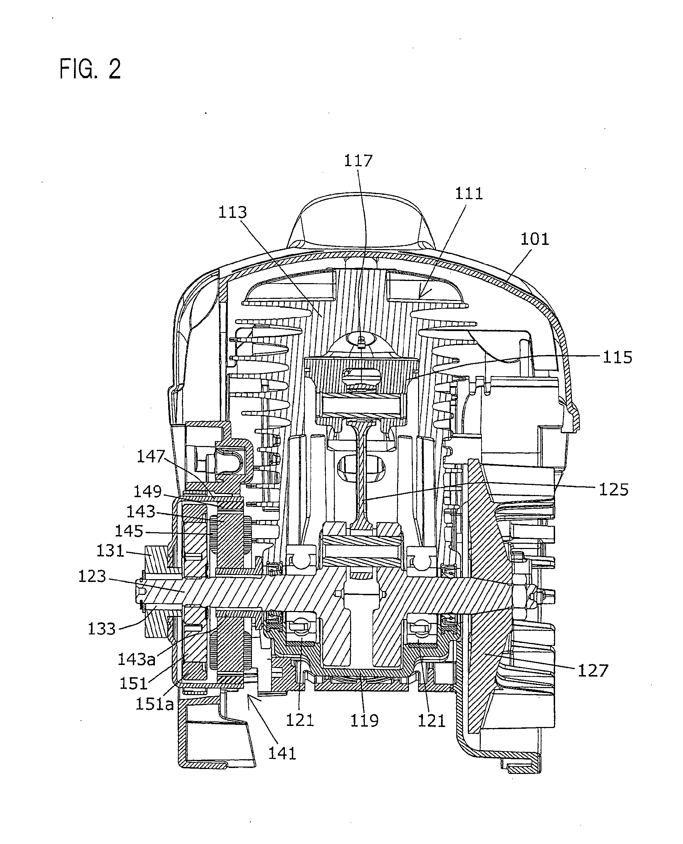

As shown in Fig. 2, a driving mechanism 110 is housed in the main housing 101. The driving mechanism 110 is mainly provided with an engine 111 and an electric motor 141. In the driving mechanism 110, both of output of the engine 111 and the electric motor 141 are transmitted to the saw chain 105 via a driving shaft 131. Namely, the chain saw 100 is provided as a hybrid power tool driven by two different kinds of driving sources of the engine 111 and the electric motor 141.

The engine 111 is provided as a reciprocating engine, which is mainly provided with a cylinder 113 , a piston 115 , a spark plug 117, a crank case 119, a crank shaft 123 and a connecting rod 125. The piston 115 is slidably arranged within the cylinder 113. The spark plug 117 is arranged above the piston 115 in the cylinder 113. The crank case 119 is arranged under the cylinder 113 so as to connect to the cylinder113. The crank shaft 123 is rotatably supported by a bearing 121 and arranged within the crank case 119. The connecting rod 125 is arranged so as to connect the piston 115 and the crank shaft 123. The engine 111 is one example of a feature corresponding to "an engine" of the invention.

The crank shaft 123 is arranged so as to extend in a horizontal direction which crosses an extending direction (a lateral direction of Fig. 1) of the guide bar 103. One end side of the crank shaft 123 (a left hand side of Fig. 2) is protruded outward from the main housing 101. The driving shaft 131 is attached at a protruding region of the crank shaft 123 via a needle bearing 133, the driving shaft 131 being relatively rotatable against the crank shaft 123.

A fly wheel 127 is attached on the other end side of the crank shaft 123 (a right hand side of Fig. 2) so as to rotate integrally with the crank shaft 123. On the fly wheel 127, a recoil starter (not shown) is attached via a coupling. Accordingly, by operating the recoil starter, a user is able to start the engine 111. The recoil starter 127 is also called a manual starter or a pull starter.

The electric motor 141 is provided as an outer rotor motor, and arranged coaxially with the crank shaft 123. The electric motor 141 is mainly provided with a stator core 143, a stator coil 145, an outer rotor 147 and a magnet 149. The stator core 143 is a disk-shaped member made of a magnetic material. The stator core 143 is fixed to outer surfaces of the cylinder 113 and the crank case 119 via a sleeve 143a. That is, the crank shaft 123 is inserted into the sleeve 143a, and thereby the crank shaft 123 is rotatable against the fixed stator core 143. The stator coil 145 is wound on the stator core 143, and the stator core 143 is excited when current is provided to the stator coil 145.

The outer rotor 147 is a cup-shaped member which has a cylindrical side wall 147a and a bottom wall 147b. The side wall 147a is arranged so as to surround the stator core 143. The magnet 149 is arranged on an inner surface of the side wall 147a so as to face an outer surface of the stator core 143. The crank shaft 123 penetrates the bottom wall 147a and the bottom wall 147a is fixed to the driving shaft 131. That is, the outer rotor 147 of the electric motor 141 is directly connected to the driving shaft 131, and thereby output of the electric motor 141 is transmitted to the driving shaft 131. The electric motor 141 is one example of a feature corresponding to "a motor" of the invention.

A centrifugal clutch 151 is arranged between the crank shaft 123 and the outer rotor 147 so as to rotate integrally with the crank shaft 123. In the centrifugal clutch 151, a clutch shoe 151a is moved outward in a radial direction of the centrifugal clutch 151 by a centrifugal force caused by rotation of the crank shaft 123, and thereby the clutch shoe 151a contacts with the inner surface of the side wall 147a. Accordingly, the centrifugal clutch 151 transmits rotation of the crank shaft 123 to the outer rotor 147. That is, in a state that a rotation speed of the crank shaft 123 is not faster than a predetermined threshold, rotation of the crank shaft 123 is not transmitted to the outer rotor 147. On the other hand, in a state that rotation speed of the crank shaft 123 is faster than the threshold, rotation of the crank shaft 123 is transmitted to the outer rotor 147.

As shown in Fig. 1, the rear handle 107 is provided with an upper side portion 107a, a lower side portion 107b and a battery attached portion 107c. The rear handle 107 is formed so as to protrude rearward from the main housing 103. A throttle lever 135 and a controller 139 are arranged on the rear handle 107. A battery pack 137 is detachably attached to the battery attached portion 107c of the rear handle 107. The battery pack 137 stores electricity for driving the electric motor 141.

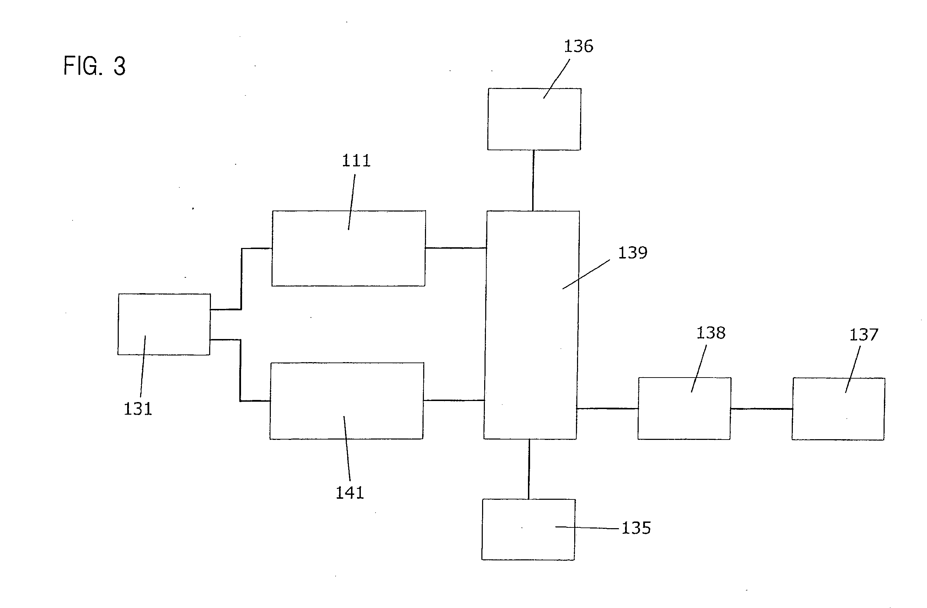

Further, as shown in Fig. 3, the chain saw 100 has a mode switching switch 136 and a capacitor 138. The mode switching switch 136 and the capacitor 138 are not drawn in Fig. 1, however these members are arranged at the lower side portion 107b of the rear handle 107. Specifically, the mode switching switch 136 is arranged above the controller 139 at the lower side portion 107b. Further, the capacitor 138 is arranged between the controller 139 and the battery attached portion 107c at the lower side portion 107b. The mode switching switch 136 is connected to the controller 139. The mode switching switch 136 is preferably provided with a push-button or an operation lever which are operated by a user. The capacitor 138 connects the attached battery pack 137 and the controller 139 electrically. Therefore, the capacitor 138 is charged by providing electric current from the battery pack 137. The controller 139, the capacitor 138 and the battery pack 137 are arranged in order of increasing distance from the main housing 103.

The controller 139 is provided as a control device which controls the engine 111 and the electric motor 141. That is, the controller 139 controls driving of the electric motor 141 by providing electric current from the battery pack 137 via the capacitor 138. Further, the controller 139 controls an amount of inlet air and/or a mixture ratio of fuel and air for the engine 111 based on a manipulated variable of the throttle lever 135, and thereby the controller 139 adjusts output (rotation speed) of the engine 111. Further, the controller 139 switches a driving mode of the chain saw 100 to one of the first, the second and the third driving modes based on a mode selected by the mode switching switch 136. That is, in the first driving mode, the saw chain 105 is driven by both the engine 111 and the electric motor 141. In the second driving mode, the saw chain 105 is driven by only the engine 111. Further, in the third driving mode, the saw chain 105 is driven by only the electric motor 141.

When the first driving mode is selected and the throttle lever 135 is operated, the engine 111 and the electric motor 141 are driven. In a state that the rotation speed exceeds the predetermined threshold, rotation of the crank shaft 123 is transmitted to the outer rotor 147 via the centrifugal clutch 151. Therefore, both the engine 111 and the electric motor 141 drive the driving shaft 131. That is, in the chain saw 100, the saw chain 105 is driven by both the engine 111 and the electric motor 141 at the same time. The first driving mode is one example of a feature corresponding to "a hybrid driving mode" of the invention. Further, the driving shaft 131 is one example of a feature corresponding to "a driving shaft" of the invention.

When the second driving mode is selected and the throttle lever 135 is operated, only the engine 111 is driven. In a state that the rotation speed exceeds the predetermined threshold, rotation of the crank shaft 123 is transmitted to the outer rotor 147 via the centrifugal clutch 151. Therefore, the engine 111 drives the driving shaft 131 via the outer rotor 147. That is, in the chain saw 100, the saw chain 105 is driven by only the engine 111. At this time, as the outer rotor 147 is rotated, the electric motor 141 is performed as a generator, and thereby electric current generated by the generator is provided to the capacitor via the controller 139. Especially, it is preferable to provide electric current caused when the controller 139 brakes the electric motor 141 to the capacitor 138.

When the third driving mode is selected and the throttle lever 135 is operated, only the electric motor 141 is driven. Therefore, the outer rotor 147 of the electric motor 141 drives the driving shaft 131. That is, in the chain saw 100, the saw chain 105 is driven only the electric motor 141.

A hardness distribution of a workpiece such as a wood on which the chain saw 100 performs a cutting operation is generally non-uniform. Accordingly, in the first and the third driving modes in which at least the electric motor 141 is driven, a heavy load is exerted temporarily on the electric motor 141 due to a partial high hardness of a workpiece. That is, large electric current is necessary to drive the electric motor 141 in order to cut the hard part of a workpiece by a large power output. In this embodiment, the capacitor 138 is provided between the controller 139 and the battery pack 137. Therefore, electric current which is provided to the electric motor 141 is not limited by a capacity of the battery pack 137. Accordingly, the controller 139 is able to provide large electric current to the electric motor 141 temporarily from both the batter pack 137 and the capacitor 138. The capacitor 138 and the battery pack 137 are one example of a feature corresponding to "a power source" of the invention. Further, the battery pack 137, the capacitor 138 and the controller 139 are one example of features corresponding to "a battery", "a capacitor" and "a controller" respectively.

According to this embodiment, in the second driving mode in which the electric motor 141 does not drive the driving shaft 131, the electric motor 141 functions as a generator and provides current to the capacitor 138. Further, because the capacitor 138 is arranged between the controller 139 and the battery pack 137, in a state that a voltage of the capacitor 138 becomes higher than a voltage of the battery pack 137, current is automatically provided (flowed) from the capacitor 138 to the battery pack 137, and thereby the battery pack 137 is charged independently of the controller 139. That is, based on a voltage of the capacitor 138 and a voltage of the battery pack 137, the battery pack 137 is charged automatically. Therefore, overcurrent to the battery pack 137 is prevented compared with an aspect in which the battery pack 137 is forcibly charged. Further, an overcharge of the battery pack 137 is also prevented compared with the similar aspect described above in which the battery pack 137 is forcibly charged.

Further, according to this embodiment, because the capacitor 138 and the controller 139 are arranged at the lower side portion 107b of the rear handle 107, the capacitor 138 and the controller are distantly positioned from the engine 111 and the electric motor 141 which generate heat. That is, the capacitor 138 and the controller 139 are protected from heat of the engine 111 and the electric motor 141. Further, because the battery attached portion 107c is arranged at a distal end region of the rear handle 107, which is distant from the engine 111 and the electric motor 141, the attached battery pack 137 is protected from heat of the engine 111 and the electric motor 141. Generally, a heat protection of the battery pack 137 is necessary rather than the controller 139 and the capacitor 138, because the battery pack 137 has high-capacity. According to such arrangement of the battery attached portion 107c, the attached battery pack 137 is effectively protected from heat of the engine 111 and the electric motor 141.

Further, according to this embodiment, when the electric motor 141 does not drive the driving shaft 131, the electric motor 141 functions as a generator. That is, it is not necessary to provide both a motor and a generator on the chain saw 100, and thereby the chain saw 100 is lightened and downsized.

Further, according to this embodiment, one of the driving modes among the first to the third driving modes is selected and the driving shaft 131 (the saw chain 105) is driven in the selected driving mode. Accordingly, a user can switch the driving modes based on a load exerted on the saw chain 105, and thereby power output of the chain saw 100 is switched. As a result, an energy efficiency of the chain saw 100 is improved.

Further, according to this embodiment, because the electric motor 141 is provided as an outer rotor motor, relatively large torque is obtained compared with the same size inner rotor motor. That is, distance (radius) of the electric motor 141 from a center of the rotation to a periphery of the outer rotor 147 is lengthened, and thereby the large torque of the electric motor 141 is obtained. As a result, the chain saw 100 is downsized.

In this embodiment described above, the battery pack 137 is charged by electric current provided automatically from the capacitor 138 to the battery pack 137 based on the voltage of the capacitor 138 and the voltage of the 137, however it is not limited to such aspect. For example, a sensor which detects the voltage of the capacitor 138 and the battery pack 137 may be provided, and further the battery pack 137 may be charged by electric current provided by the controller 139 from the capacitor 138 to the battery pack 137 based on a detection result of the sensor.

Further, in this embodiment, current is provided to the electric motor 141 from the battery pack 137, however it is not limited to such aspect. For example, the battery pack 137 may not be provided to the chain saw 100, and only the capacitor 138 may be provided and utilized as a power source.

Further, in this embodiment, the electric motor 141 is provided as an outer rotor motor, however it is not limited to the outer rotor motor, an inner rotor motor may be provided to the chain saw 100.

Further, in this embodiment, the driving shaft 131 (saw chain 105) is driven in the selected driving mode from the first, the second and the third driving modes, however it is not limited to such aspect. For example, the chain saw 100 may have at least the first driving mode. That is, the chain saw 100 may not have the second and/or the third driving modes.

Further, in this embodiment, the chain saw 100 is used to explain as one example of a power tool, however other power tool may be applied to the invention. As long as a power tool has an engine and a motor, for example, a brush cutter, a hammer drill or a circular saw may be applied.

A correspondence relation between each component of the embodiment and the invention is explained as follows. Further, the embodiment is one example to utilize the invention and the invention is not limited to the embodiment.
The chain saw 100 corresponds to "a power tool" of the invention.
The engine 111 corresponds to "an engine" of the invention.
The electric motor 141 corresponds to "a motor" of the invention.
The driving shaft 131 corresponds to "a driving shaft" of the invention.
The first driving mode corresponds to "a hybrid driving mode" of the invention.
The battery pack 137 corresponds to "a power source" of the invention.
The battery pack 137 corresponds to "a battery" of the invention.
The capacitor 138 corresponds to "a power source" of the invention.
The capacitor 138 corresponds to "a capacitor" of the invention.
The controller 139 corresponds to "a controller" of the invention.

Having regard to an aspect of the invention, following features are provided:

### (Feature 1)

The power tool according to claim 3, further comprising a sensor which detects both voltage of the capacitor and the battery, and a capacitor control device which controls the capacitor based on a detection result of the sensor.

### (Feature 2)

The power tool according to feature 1, when the sensor detects that a voltage of the capacitor is higher than a voltage of the battery, the capacitor control device controls the capacitor so as to provide current to the battery and charge the battery.

### (Feature 3)

The power tool according to any one of claims 1 to 4 or any one of features 1 and 2, further comprising a motor driving mode in which only the motor drives the driving shaft, and an engine driving mode in which only the engine drives the driving mode,
wherein the hybrid driving mode, the motor driving mode and the engine driving mode are selectively switchable,
and wherein the tool is driven in the selected driving mode.

### (Feature 4)

The power tool according to feature 3, further comprising a mode switching switch for switching the driving mode, and an operating member which operates the mode switching switch, wherein the operating member is manually operable by a user.

### (Feature 5)

The power tool according to any one of claims 1 to 4, comprising a main housing which houses the engine and the motor, and a handle which protrudes from the main housing,
wherein the power source is arranged at the handle.

### (Feature 6)

The power tool according to feature 5, wherein the controller and the power source are arranged at the handle so that a distance between the power source and the main housing is longer than a distance between the controller and the main housing.

### (Feature 7)

The power tool according to feature 6, wherein the power source includes a battery,
and wherein the controller, the capacitor and the battery are arranged at the handle in order of increasing distance from the main housing.

### Description of Numerals:

- 100: chain saw
- 101: main housing
- 103: guide bar
- 105: saw chain
- 106: front handle
- 107: rear handle
- 107a: upper side portion
- 107b: lower side portion
- 107c: battery attached portion
- 108: hand guard
- 111: engine
- 113: cylinder
- 115: piston
- 117: spark plug
- 119: crank case
- 121: bearing
- 123: crank shaft
- 125: connecting rod
- 127: fly wheel
- 131: driving shaft
- 133: needle bearing
- 135: throttle lever
- 136: mode switching switch
- 137: battery pack
- 138: capacitor
- 139: controller
- 141: electric motor
- 143: stator core
- 143a: sleeve
- 145: stator coil
- 147: outer rotor
- 147a: side wall
- 147b: bottom wall
- 149: magnet
- 151: centrifugal clutch
- 151a: clutch shoe

## Claims

1. A power tool comprising:
an engine,
a motor,
a driving shaft capable of driving a tool,
a controller which controls the motor, and
a power source which provides current to the motor,
the tool being drivable in a hybrid driving mode in which both the engine and the motor drive the driving shaft,
wherein the power source includes a capacitor which is electrically connected to the controller.

2. The power tool according to claim 1, wherein the motor functions as a generator which charges the capacitor, when the motor is driven by the engine.

3. The power tool according to claim 1 or 2, wherein the power source further includes a battery,
and wherein the capacitor is arranged between the battery and the controller so that the capacitor electrically connects the battery and the controller.

4. The power tool according to claim 3, wherein in a state that a voltage of the capacitor is higher than a voltage of the battery, the battery is charged by current provided from the capacitor to the battery.

5. The power tool according to any one of claims 1 to 4, further comprising a motor driving mode in which only the motor drives the driving shaft, and an engine driving mode in which only the engine drives the driving shaft,
wherein the hybrid driving mode, the motor driving mode and the engine driving mode are selectively switchable, and wherein the tool is driven in the selected driving mode.

6. The power tool according to any one of claims 1 to 5, comprising a main housing which houses the engine and the motor, and a handle which protrudes from the main housing,
wherein the power source is arranged at the handle.

7. The power tool according to claim 6, wherein the controller and the power source are arranged at the handle so that a distance between the power source and the main housing is longer than a distance between the controller and the main housing.

8. The power tool according to claim 6 or 7, wherein the power source includes a battery,
and wherein the controller, the capacitor and the battery are arranged at the handle in order of increasing distance from the main housing.
